# EUROPÄISCHE PATENTSCHRIFT

(11) **EP 0 831 694 B1**
(45) Veröffentlichungstag und Bekanntmachung des Hinweises auf die Patenterteilung: **06.10.1999**
(21) Anmeldenummer: 96915988.8
(22) Anmeldetag: 11.06.1996
(51) Int. Cl.: A01K 93/00, A01K 91/10

(54) **SCHWIMMER MIT SELBSTAUSLÖSER**
FLOAT WITH AUTOMATIC TRIGGERING DEVICE
FLOTTEUR AVEC DECLENCHEUR AUTOMATIQUE

(30) Priorität: 14.06.1995 DE 19521664
(43) Veröffentlichungstag der Anmeldung: 01.04.1998
(73) Patentinhaber: Maric, Mijo, 74080 Heilbronn (DE)
(72) Erfinder: MARIC, Mijo, D-74080 Heilbronn (DE); MUJAGIC, Mehmed, D-74072 Heilbronn (DE)
(74) Vertreter: KOHLER SCHMID + PARTNER
(86) Internationale Anmeldenummer: DE9601015
(87) Internationale Veröffentlichungsnummer: WO9700009

(56) Entgegenhaltungen:
- DE-A- 2 029 620
- DE-A- 2 245 642

## Beschreibung

Die vorliegende Erfindung betrifft einen Schwimmer mit Selbstauslöser für ein Angelgerät, mit einer Innenhülse, die in ein Schwimmergehäuse in Richtung der Längsachse des Schwimmergehäuses gegen den Druck einer Spannfeder einschiebbar und im eingeschobenen Zustand durch eine Federklinke gehalten ist, die in dieser Stellung durch einen Kontakthebel arretierbar und deren Arretierung durch Auslenkung des Kontakthebels in Richtung der Längsachse des Schwimmergehäuses wieder lösbar ist, wobei eine Angelschnur durch die Innenhülse hindurchgeführt und mit einem oberhalb der Innenhülse angeordneten Mitnehmer derart verbunden ist, daß die Innenhülse bei der Bewegung aus der eingeschobenen arretierten Stellung in die Ausgangsstellung die Angelschnur und einen mit der Angelschnur verbundenen Angelhaken mit Hilfe des Mitnehmers mitzieht.

Ein derartiger Schwimmer ist aus der DE-GM 78 24 353 bekannt.

Beim Angelsport und Sportfischen werden Angelgeräte verwendet, bei denen ein mit der Angelschnur verbundener Schwimmer auf der Wasseroberfläche angeordnet ist. Wenn nun ein Fisch den am Angelhaken befindlichen Köder beißt, zieht er den Angelhaken und damit die Angelschnur nach unten, so daß dem Angler durch eine Tauchbewegung des Schwimmers das Anbeißen des Fisches signalisiert wird. Um den Fisch sicher aus dem Wasser ziehen zu können, ist es notwendig, daß auf das Ende der Angelschnur ein Zug ausgeübt wird, der durch eine Verkürzung der Angelschnur, d. h., ein ruckartiges Einholen der Angelschnur, erreicht werden kann. Bei herkömmlichen Angelgeräten muß der Angler selbst dafür Sorge tragen, daß das ruckartige Einholen der Angelschnur in dem Augenblick erfolgt, in dem der Fisch an dem Köder anbeißt.

Daher ist bei dem bekannten Schwimmer ein Selbstauslösemechanismus vorgesehen, der nach dem Anbeißen des Fisches an dem Köder ein automatisches ruckartiges Einholen der Angelschnur bewirkt. Dies wird bei dem bekannten Schwimmer dadurch erreicht, daß eine Federhülse gegen den Druck einer Spannfeder in das Gehäuse einschiebbar ist und über eine Federklinke gehalten wird.

Wenn ein Fisch anbeißt, läßt sich die Angelschnur über den Angelhaken in die Tiefe ziehen, so daß ein mit der Angelschnur verbundener erster Mitnehmer eine innerhalb der Federhülse verschiebliche Kontakthülse gegen den Kontakthebel bewegt, so daß die Federklinke einen Absatz an der Federhülse freigibt und die Arretierung gelöst wird. Dabei muß der Kontakthebel gegen eine Druckfeder bewegt werden. Nach der gelösten Arretierung wird die Federhülse durch die Spannkraft der Spannfeder nach oben aus dem Schwimmergehäuse herausbewegt und bewegt mittels eines zweiten Mitnehmers die Kontakthülse ebenfalls aus dem Schwimmergehäuse heraus, so daß mittels des ersten Mitnehmers auch die Angelschnur nach oben gezogen wird und ein ruckartiges Einholen der Angelschnur erreicht wird.

Nachteiligerweise wirkt das Ziehen des Fisches an dem Angelhaken nicht direkt auf den Auslösemechanismus. Aus der Bewegung des Angelhakens resultiert zunächst eine Verschiebung der Kontakthülse, die den Kontakthebel in eine Auslöseposition bringt. Da die Kontakthülse innerhalb der Federhülse geführt ist, muß bei einer Bewegung der Kontakthülse eine nicht zu vernachläßigende Reibung überwunden werden. Die zu überwindende Reibkraft wird noch dadurch erhöht, daß der Schwimmer sich im Wasser befindet und einer Verschmutzung ausgesetzt ist.

Weiterhin ist von Nachteil, daß die Sperrklinke rechtwinklig ausgebildet ist, eine Schwenkachse in der Mitte der beiden rechtwinkligen Schenkel aufweist und das Ende des einen Schenkels im Bereich der Schwenkachse des Kontakthebels aufliegt. Daher ist eine große Auslenkung des Kontakthebels gegen eine Druckfeder notwendig, um die Sperrklinke für eine Freigabe der Federhülse zu entriegeln.

Da die Zugkraft an dem Angelhaken über die Federhülse auf die Kontakthülse und erst über die Kontakthülse auf die Angelschnur übertragen wird, entsteht eine indirekte Zugwirkung zum Einholen der Angelschnur mit einer geringen Zugkraft. Die auf den Angelhaken resultierende Zugkraft wird noch dadurch verringert, daß die Feder- und Kontakthülse des bekannten Schwimmers, der sich beim Einsatz im Wasser befindet, gegeneinander beweglich und einer Reibkraft und Verschmutzung ausgesetzt sind.

Zusätzlich ist es von Nachteil, daß bei dem Auslösemechanismus des bekannten Schwimmers kein Spiel für ein Auslenken des Angelhakens durch einen Fisch einstellbar ist, so daß der Auslösemechanismus beim Ziehen am Angelhaken nicht sofort anspricht.

Auch kann die Auslösekraft des Auslösemechanismus bei dem bekannten Schwimmer nicht eingestellt werden, deren Einstellbarkeit zum Angeln unterschiedlich großer Fische vorteilhaft wäre.

Der vorliegenden Erfindung liegt daher die Aufgabe zugrunde, den bekannten Schwimmer derart weiterzuentwickeln, daß der Selbstauslösemechanismus des Schwimmers einerseits gegen unbeabsichtigtes Auslösen beim Auswurf und bei starkem Wellengang an der Wasserobfläche geschützt ist und andererseits ein schnelleres, feinfühligeres Ansprechverhalten aufweist.

Diese Aufgabe wird erfindungsgemäß dadurch gelöst, daß eine Stirnseite des Kontakthebels an einer der Drehachse des Kontakthebels gegenüberliegenden Innenseite der Sperrklinke anliegend die Sperrklinke im eingeschobenen Zustand der Innenhülse arretiert, und daß die Angelschnur eine Verdickung aufweist, die beim Ziehen des Angelhakens unmittelbar auf den Kontakthebel drückt und diesen auslenkt.

Durch ein Ziehen des Angelhakens wird die Verdickung gegen den Kontakthebel gedrückt und bewegt diesen in axialer Richtung nach unten, so daß die Angelschnur direkt auf den Kontakthebel einwirkt. Aus diesem Grunde wird ein rasches und schnelles Ansprechverhalten des Auslösemechanismus erreicht.

Da nur wenige Bauteile mit geringen aneinander anliegenden Reibflächen zum Erreichen dieses Auslösemechanismus notwendig sind, kann die Wirkungsweise des erfindungsgemäßen Schwimmers vorteilhafterweise weniger stark durch Verschmutzung beeinträchtigt werden. Da der Zug der Angelschnur direkt auf den Kontakthebel wirkt, läßt sich ein hoher Wirkungsgrad ohne Reibungsverluste erreichen, wie sie bei dem bekannten Schwimmer entstehen.

Vorteilhafterweise muß zum Auslösen des Selbstauslösemechanismus bei der vorliegenden Erfindung lediglich die Angelschnur bewegt werden, die eine Verdickung zum Zusammenwirken mit dem Kontakthebel aufweist. Bei einer besonders bevorzugten Ausführungsform der vorliegenden Erfindung wird die Verdickung der Angelschnur durch eine an der Angelschnur befestigte Kugel gebildet. Auf diese Art und Weise läßt sich die Verdickung einfach und mit einer leichten Bauweise realisieren. Die verwendete Kugel könnte aber auch eine Bleikugel sein, so daß die Angelschnur auf diese Art und Weise innerhalb des Schwimmergehäuses straff gehalten wird.

Wenn die Spannfeder auf die Innenhülse aufgeschoben und zwischen einem am oberen Ende der Innenhülse angeordneten, umlaufenden Wulst und dem oberen Ende des Schwimmergehäuses zusammendrückbar ist, läßt sich eine Spannfeder geringerer Spannkraft bei Bedarf leicht austauschen, da sie außerhalb des Schwimmergehäuses angeordnet ist. Dies wirkt sich ebenso vorteilhaft aus, wenn der erfindungsgemäße Schwimmer gereinigt werden muß.

Da sich die Spannfeder oberhalb des Schwimmergehäuses angeordnet ist, befindet sie sich im eingesetzten Zustand oberhalb der Wasseroberfläche und kann im ausgelösten Zustand ohne Beeinträchtigung durch den Wasserwiderstand expandieren.

Auf einfache Art und Weise läßt sich eine Vorspannung des Kontakthebels erreichen, damit der Kontakthebel in seine horizontale Ausgangslage zurückkehrt, wenn ein Gummiband einenends mit dem gelagerten Ende des Kontakthebel und anderenends in axialer Richtung am unteren Ende des Schwimmergehäuses befestigt ist.

Bei einer weiteren bevorzugten Ausführungsform der vorliegenden Erfindung ist eine Einstellschraube zur Einstellung der Auslösekraft des Kontakthebels vorgesehen. Dies hat den Vorteil, daß die Auslösekraft für den Auslösemechanismus unterschiedlich eingestellt werden kann, so daß die Auslösekraft je nach Wellengang, Wurfweite, Fischgröße und Eintauchtiefe im Wasser abgestimmt werden kann.

Bei einer anderen Ausführungsform der vorliegenden Erfindung ist am unteren Ende der Innenhülse ein nach außen federnd vorstehender Absatz zum Hintergreifen der Sperrklinke ausgebildet, wobei die Innenhülse jeweils seitlich des Absatzes Ausnehmungen aufweist. Durch die seitlichen Ausnehmungen in der Innenhülse läßt sich eine Federwirkung erreichen, so daß der Absatz beim Einschieben der Innenhülse an einer Gehäuseinnenwand des Schwimmergehäuses anliegen kann und an der Gehäusewand geführt bis zum Erreichen der Sperrklinke bewegt wird. Daher rastet der Absatz der Innenhülse vorteilhafterweise an der Sperrklinke leicht und sicher ein. Durch die Ausnehmungen wird an der Innenhülse eine Art Lasche gebildet, an der der Absatz angeordnet ist. Durch diese vorstehende Lasche wird gewährleistet, daß der Absatz die Sperrklinke sicher und zuverlässig hintergreifen kann.

Bei einer weiteren Ausführungsform besteht der Mitnehmer aus zwei ineinander steckbaren Teilen, zwischen denen die Angelschnur gehalten ist. Da die Angelschnur in dem Mitnehmer durch einen Reibschluß gehalten ist, läßt sich durch Überwindung der Reibkraft der Abstand zwischen Mitnehmer und Verdickung einstellen. Wenn der Mitnehmer fest gehalten wird, kann die Angelschnur durch den Mitnehmer hindurch gezogen werden. Über diese Einstellung wird der Abstand der Verdickung gegenüber dem Kontakthebel justiert. Wenn nun langsam an dem Angelhaken und damit an der Angelschnur gezogen wird, gleitet die Angelschnur unter Überwindung der Reibkraft an den Teilen des Mitnehmers entlang, bis die Verdickung den Kontakthebel auslöst. Folglich kann eingestellt werden, wie weit die Angelschnur beziehungsweise der Angelhaken ausgelenkt werden muß, bis der Selbstauslösemechanismus einsetzt. Wenn der Selbstauslösemechanismus einsetzt und die Innenhülse nach oben bewegt wird, ist der Reibschluß ausreichend, um die Angelschnur ruckartig nach oben zu ziehen.

Wenn das untere, in das Schwimmergehäuse einschiebbare Ende der Innenhülse einen an der Innenhülse gelagertes Rastelement aufweist, das im ausgelösten, auseinandergeschobenen Zustand von Innenhülse und Schwimmergehäuse einen Absatz einer Ausnehmung des Schwimmergehäuses hintergreift, kann verhindert werden, daß der Schwimmer bei dieser ruckartigen Bewegung des Selbstauslösemechanismus in seine Einzelteile zerlegt wird.

Damit der Schwimmer ein geringes Gewicht aufweist und an der Wasseroberfläche sicher aufschwimmt, ist der Schwimmer vorteilhafterweise aus Kunststoff herstellbar.

Weitere Vorteile ergeben sich aus der Beschreibung der beigefügten Zeichnung. Ebenso können die vorstehend genannten und hier noch weiter aufgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter.

Die Erfindung ist in der Zeichnung dargestellt und wird anhand von Ausführungsbeispielen näher erläutert. Es zeigt:
- Fig. 1: einen Längsschnitt durch Teile eines erfindungsgemäßen Schwimmers;
- Fig. 2: einen Schnitt längs der Linie II-II der Figur 1 und
- Fig. 3: einen ausgelösten, auseinandergeschobenen Zustand von Innenhülse und Schwimmergehäuse.

Die Figuren der Zeichnung zeigen den erfindungsgemäßen Gegenstand stark schematisiert und sind nicht maßstäblich zu verstehen. Die gegenständlichen Merkmale sind in den einzelnen Figuren so dargestellt, daß ihr Aufbau gut gezeigt werden kann.

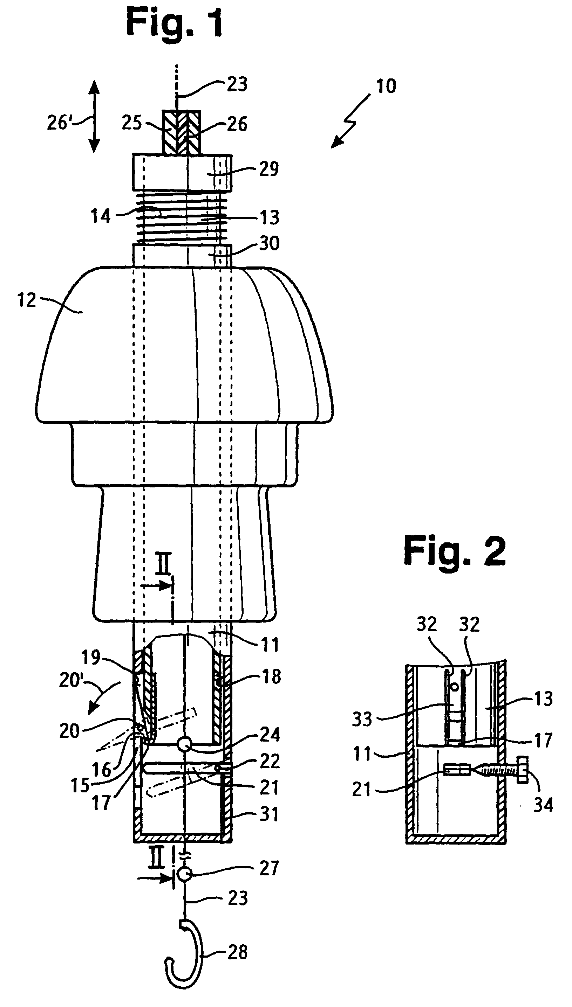

Figur 1 zeigt einen Längsschnitt durch einen Schwimmer 10, der ein Schwimmergehäuse 11 aufweist, das mit einem ballonartigen Schwimmkörper 12 verbunden ist, der den Schwimmer 10 beim Angeln an einer Wasseroberfläche halten kann. In das Schwimmergehäuse 11 ist eine Innenhülse 13 gegen den Druck einer Spannfeder 14 eingeschoben. In der eingeschobenen Stellung wird die Innenhülse 13 durch eine Sperrklinke 15 und einen eine Rastnase 16 der Sperrklinke 15 hintergreifenden Absatz 17 der Innenhülse 13 gehalten. Der Absatz 17 ist an der Innenhülse 13 federnd und in radialer Richtung vorstehend ausgebildet. Beim Einführen der Innenhülse 13 in das Schwimmergehäuse 11 gleitet der Absatz 17 an einer Innenwand 18 des Schwimmergehäuses 11 und an einer Anlaufschräge 19 der Sperrklinke 15 entlang und hintergreift anschließend die Rastnase 16 der Sperrklinke 15. In der in der Figur gezeigten Stellung ist die Sperrklinke 15, die um eine Drehachse 20 drehbar gelagert ist, durch den Kontakthebel 21 arretiert, dessen Stirnseite an einer Innenseite der Sperrklinke 15 anliegt. Der Kontakthebel 21 ist ebenfalls um eine Drehachse 22 schwenkbar und weist mittig eine Durchgangsbohrung auf, durch die eine Angelschnur 23 hindurchgeführt ist. In der Figur sind strichpunktiert die auslenkbaren Stellungen der Sperrklinke 15 und des Kontakthebels 21 gezeigt.

Durch das Schwimmergehäuse 11 und die Innenhülse 13 ist die Angelschnur 23 hindurchgeführt. Die Angelschnur 23 weist eine Verdickung 24 auf, die vom Kontakthebel 21 mehr oder weiniger beabstandet sein kann. Der Abstand zwischen der Verdickung 24 und dem Kontakthebel 21 ist über einen Mitnehmer einstellbar, da durch die Auflage des Mitnehmers auf dem Schwimmergehäuse die Länge der Angelschnur 23 bestimmt wird, die durch den Schwimmer 10 hindurch geführt ist. Die Angelschnur 23 ist zwischen einem ersten Teil 25 und einem zweiten Teil 26 des Mitnehmers eingeklemmt. Unter Überwindung der Reibkraft kann die Angelschnur zwischen dem ersten Teil 25 und dem zweiten Teil 26 des Mitnehmers hindurch in Pfeilrichtung 26' gezogen werden.

Ein Bleigewicht 27 und ein Angelhaken 28 sorgen dafür, daß die Angelschnur 23 gestrafft ist. Wenn der Angelhaken 27 in axialer Richtung nach unten gezogen wird, rutscht die Angelschnur 23 zwischen dem ersten und dem zweiten Teil 25 und 26 des Mitnehmers eine Reibkraft überwindend nach unten und die Verdickung 24 berührt den Kontakthebel 21. Wenn die Angelschnur weiter nach unten gezogen wird, lenkt die Verdickung 24 den Kontakthebel 21 in die strichpunktierte Stellung aus. In dieser strichpunktierten Stellung des Kontakthebels 21 ist die Sperrklinke 15 nicht mehr arretiert, so daß die Sperrklinke 15 um die Drehachse 20 in Drehrichtung 20' aufgrund der Federwirkung der Spannfeder 14 ausgelenkt wird.

Aufgrund der Spannkraft der Spannfeder 14 wird die Innenhülse 13 nach oben bewegt und nimmt aufgrund Ihrer schnellen Bewegung den Mitnehmer und die Angelschnur 23 ruckartig mit nach oben. Dies hat zur Folge, daß der Angelhaken 28 ebenfalls ruckartig angezogen wird.

Ein Fisch, der in diesem Moment einen an dem Angelhaken 28 befindlichen Köder gebissen hat, wird durch den Auslösemechanismus des Schwimmers 10 gefangen.

Nach dem Auslösen kann die Innenhülse 13 wiederum in das Schwimmergehäuse 11 des Schwimmers 10 gegen den Druck der Spannfeder 14 eingeschoben werden. Im eingeschobenen Zustand ist die Spannfeder 14 zwischen einem umlaufenden Wulst 29 der Innenhülse 13 und einem oberen Ende 30 des Schwimmergehäuses 11 vorgespannt. Ein Gummiband 31 sorgt dafür, daß der Kontakthebel 21 nach dem Auslösen wieder in seine horizontale Lage zurückkehrt.

Figur 2 zeigt einen Schnitt längs der Linie II-II durch den Schwimmer 10. Die Innenhülse 13 weist Ausnehmungen 32 auf, die eine Lasche 33 bilden, an der der Absatz 16 angeordnet ist. Die für die Auslenkung des Kontakthebels 21 erforderliche Zugkraft ist über eine Einstellschraube 34 regelbar.

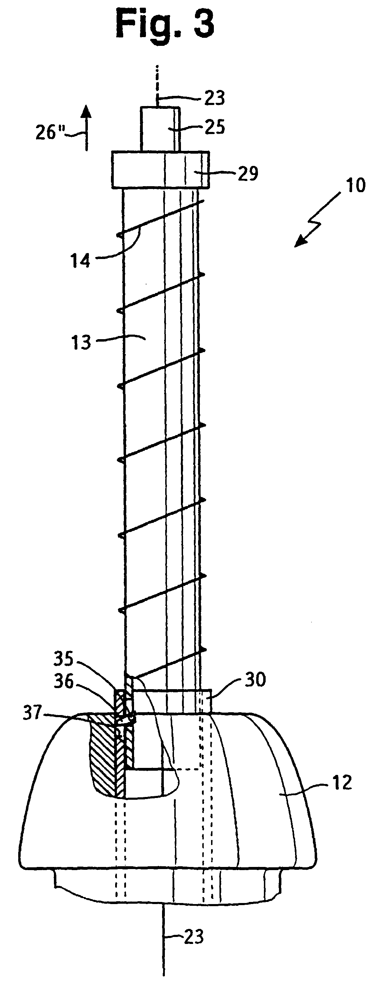

Figur 3 zeigt eine Seitenansicht des Schwimmers 10 im ausgelösten, auseinandergeschobenen Zustand. Die Innenhülse 13 ist nach oben aus dem Schwimmergehäuse 11 herausgeschoben gezeigt. Dabei ist die Spannfeder 14 zwischen dem oberen Ende 30 des Schwimmergehäuses 11 und einem umlaufenden Wulst 29 der Innenhülse 13 weitgehend entspannt. Über die Teile des Mitnehmers, von denen in der Figur nur das erste Teil 25 sichtbar ist, wurde die Angelschnur 23 in Pfeilrichtung 26'' nach oben mitgezogen. In einem aufgebrochenen Teilausschnitt des Schwimmers 10 ist ein um eine Schwenkachse 35 schwenkbares Rastelement 36 sichtbar, das ein unbeabsichtigtes Herausspringen der Innenhülse 13 aus dem Schwimmergehäuse 11 verhindert. Das Rastelement 36 hintergreift eine Kante einer Ausnehmung des Schwimmergehäuses 11. Wenn die Innenhülse 13 in das Schwimmergehäuse 11 eingeschoben wird, wird das Rastelement 36 über die Schrägfläche 37 der Ausnehmung des Schwimmergehäuses 11 nach Innen geklappt, so daß das Einschieben möglich ist.

## Patentansprüche

1. Schwimmer (10) mit Selbstauslöser für ein Angelgerät, mit einer Innenhülse (13), die in ein Schwimmergehäuse (11) in Richtung der Längsachse des Schwimmergehäuses (11) gegen den Druck einer Spannfeder (14) einschiebbar und im eingeschobenen Zustand durch eine am Schwimmergehäuse (11) drehbar befestigte Sperrklinke (15) gehalten ist, die in dieser Stellung durch einen am Schwimmergehäuse (11) über eine Drehachse (22) befestigten Kontakthebel (21) arretierbar und deren Arretierung durch Auslenkung des Kontakthebels (21) in Richtung der Längsachse des Schwimmergehäuses (11) wieder lösbar ist, wobei eine Angelschnur (23) durch die Innenhülse (13) hindurchgeführt und mit einem oberhalb der Innenhülse (13) angeordneten Mitnehmer (25, 26) derart verbunden ist, daß die Innenhülse (13) bei der Bewegung aus der eingeschobenen, arretierten Stellung in die Ausgangsstellung die Angelschnur (23) und einen mit der Angelschnur (23) verbundenen Angelhaken (28) mit Hilfe des Mitnehmers (25, 26) mitzieht,
dadurch gekennzeichnet,
daß eine Stirnseite des Kontakthebels (21) an einer der Drehachse (22) des Kontakthebels (21) gegenüberliegenden Innenseite der Sperrklinke (15) anliegend die Sperrklinke (15) im eingeschobenen Zustand der Innenhülse (13) arretiert,
und daß die Angelschnur (23) eine Verdickung (24) aufweist, die beim Ziehen des Angelhakens (28) unmittelbar auf den Kontakthebel (21) drückt und diesen auslenkt.

2. Schwimmer nach Anspruch 1 dadurch gekennzeichnet, daß die Verdickung (24) durch eine an der Angelschnur (23) befestigte Kugel gebildet ist.

3. Schwimmer nach Anspruch 1 oder 2, dadurch gekennzeichnet, daß die Spannfeder (14) auf die Innenhülse (13) aufgeschoben ist und zwischen einem am oberen Ende der Innenhülse (13) angeordneten, umlaufenden Wulst (29) und dem oberen Ende (30) des Schwimmergehäuses (11) zusammendrückbar ist.

4. Schwimmer nach einem der vorhergehenden Ansprüche, dadurch gekennzeichnet, daß ein Gummiband (31) einenends mit dem gelagerten Ende des Kontakthebels (21) und anderends in axialer Richtung am unteren Ende des Schwimmergehäuses (11) befestigt ist.

5. Schwimmer nach einem der vorhergehenden Ansprüche, dadurch gekennzeichnet, daß eine Einstellschraube (34) zur Einstellung der Auslösekraft des Kontakthebels (21) vorgesehen ist.

6. Schwimmer nach einem der vorhergehenden Ansprüche, dadurch gekennzeichnet, daß am unteren Ende der Innenhülse (13) ein nach außen federnd vorstehender Absatz (17) zum Hintergreifen der Sperrklinke (15) ausgebildet ist, wobei die Innenhülse (13) jeweils seitlich des Absatzes (17) Ausnehmungen (32) aufweist.

7. Schwimmer nach einem der vorhergehenden Ansprüche, dadurch gekennzeichnet, daß der Mitnehmer aus zwei ineinander steckbaren Teilen (25, 26) besteht, zwischen denen die Angelschnur (23) gehalten ist.

8. Schwimmer nach einem der vorhergehenden Ansprüche, dadurch gekennzeichnet, daß das untere in das Schwimmergehäuse (11) einschiebbare Ende der Innenhülse (13) eine an der Innenhülse (13) gelagertes Rastelement (36) aufweist, die im auseinandergeschobenen Zustand von Innenhülse (13) und Schwimmergehäuse (11) eine Kante einer Ausnehmung des Schwimmergehäuses (11) hintergreift.

9. Schwimmer nach einem der vorhergehenden Ansprüche, dadurch gekennzeichnet, daß der Schwimmer (10) aus Kunststoff herstellbar ist.

## Claims

1. Float (10) with automatic triggering device for a fishing apparatus having an inner sleeve (13) which can be inserted into a float housing (11) in the direction of the longitudinal axis of the float housing (11) in opposition to the pressure of a tension spring (14) and which is held in the inserted state by means of a detent pawl (15) mounted for rotation to the float housing (11) and which, in this position, can be locked by a contact lever (21) mounted via a rotation axis (22) to the float housing (11), with the locking being releasable through deflection of the contact lever (21) in the direction of the longitudinal axis of the float housing (11), wherein a fishing line (23) is passed through the inner sleeve (13) and is connected with a driver element (25, 26) disposed above the inner sleeve (13) in such a fashion that the inner sleeve (13), during motion out of the inserted locked position into the original position, carries along, with the assistance of the driver element (25, 26), the fishing line (23) and a fishing hook (28) attached to the fishing line (23)
characterized in that
one end of the contact lever (21) seats on an inner side of the detent pawl (15) lying across from the rotation axis (22) of the contact lever (21) to lock the detent pawl (15) in the inserted state of the inner sleeve (13), and
that the fishing line (23) has an enlargement (24) which presses directly on the contact lever (21) to deflect same when the fishing hook (28) is pulled.

2. Float according to claim 1, characterized in that the enlargement (24) is a ball formed on the fishing line (23).

3. Float according to claim 1 or 2, characterized in that the tensioning spring (14) is positioned over the inner sleeve (13) and can be compressed between a peripheral protrusion (29) disposed on the upper end of the inner sleeve (13) and the upper end (30) of the float housing (11).

4. Float according to one of the preceding claims, characterized in that one end of a rubber band (31) is attached to the borne end of the contact lever (21) and the other end is attached, in the axial direction, to the lower end of the float housing (11).

5. Float according to one of the preceding claims, characterized in that an adjustment screw (34) is provided for adjusting the triggering force of the contact lever (21).

6. Float according to one of the preceding claims, characterized in that a resilient outwardly protruding shoulder (17) is formed on the lower end of the inner sleeve (13) for engagement with the detent pawl (15), wherein the inner sleeve (13) has openings (32) at each side of the shoulder (17).

7. Float according to one of the preceding claims, characterized in that the driver element consists essentially of two mutually insertable parts (25, 26) between which the fishing line (23) is held.

8. Float according to one of the preceding claims, characterized in that the lower end of the inner sleeve (13) which can be inserted into the float housing (11) has a catch element (36) borne on the inner sleeve (13) which, in that state in which the inner sleeve (13) and the float housing (11) are pulled-apart, engages an edge of a opening in the float housing (11).

9. Float according to one of the preceding claims, characterized in that the float (10) can be made from plastic.

## Revendications

1. Flotteur (10) comportant un déclencheur automatique pour un ustensile de pêche, comportant une douille intérieure (13), qui peut être insérée dans un boîtier (11) du flotteur dans la direction de l'axe longitudinal du boîtier (11) du flotteur à l'encontre de la pression d'un ressort de tension (14) et est retenue, à l'état serré, par un cliquet de blocage (15) fixé de manière à pouvoir tourner sur le boîtier (11) du flotteur et qui, dans cette position, peut être bloquée par un levier de contact (21) fixé sur le boîtier (11) du flotteur par l'intermédiaire d'un axe de rotation (22), et dont le blocage peut à nouveau être supprimé par déviation du levier de contact (21) dans la direction de l'axe longitudinal du boîtier (11) du flotteur, et dans lequel un fil de pêche (23) traverse la douille intérieure (13) et est relié à un organe d'entraînement (25,26) disposé au-dessus de la douille intérieure (13) de telle sorte que lors du déplacement à partir de la position insérée et bloquée, la douille intérieure (13) entraîne conjointement, dans la position de départ, le fil de pêche (23) et un hameçon (28) relié au fil de pêche (23) à l'aide de l'organe d'entraînement (25,26),
caractérisé en ce
qu'une face frontale du levier de contact (21) bloque le cliquet de blocage (15) en s'appliquant contre un côté intérieur du cliquet de blocage (15), qui est situé à l'opposé de l'axe de rotation (22) du levier de contact (21), lorsque la douille intérieure (13) est à l'état inséré, et
que le fil de pêche (23) comporte un épaississement (24) qui, lors du tirage de l'hameçon (28), prend appui directement sur le levier de contact (21) et fait dévier ce dernier.

2. Flotteur selon la revendication 1, caractérisé en ce que l'épaississement (24) est formé par une bille fixée au fil de pêche (23).

3. Flotteur selon la revendication 1 ou 2, caractérisé en ce que le ressort de tension (14) est emmanché sur la douille intérieure (13) et peut être comprimé entre un rebord circonférentiel (29), qui est disposé sur l'extrémité supérieure de la douille intérieure (13), et l'extrémité supérieure (30) du boîtier (11) du flotteur.

4. Flotteur selon l'une des revendications précédentes, caractérisé en ce qu'une bande de caoutchouc (31) est fixée, par une extrémité, sur l'extrémité tourillonnée du levier de contact (21) et, par son autre extrémité, dans la direction axiale sur l'extrémité inférieure du boîtier (11) du flotteur.

5. Flotteur selon l'une des revendications précédentes, caractérisé en ce qu'une vis de réglage (34) est prévue pour le réglage de la force de déclenchement du levier de contact (21).

6. Flotteur selon l'une des revendications précédentes, caractérisé en ce que sur l'extrémité inférieure de la douille intérieure (13) est formé un organe saillant (17) qui fait saillie élastiquement vers l'extérieur et est destiné à s'engager derrière le cliquet de blocage (15), la douille intérieure (13) comportant des évidements (32) situés respectivement à côté de l'organe saillant (17).

7. Flotteur selon l'une des revendications précédentes, caractérisé en ce que l'organe d'entraînement est constitué de deux parties (25,26) pouvant être enfichées l'une dans l'autre et entre lesquelles le fil de pêche (23) est retenu.

8. Flotteur selon l'une des revendications précédentes, caractérisé en ce que l'extrémité inférieure, qui peut être insérée dans le boîtier (11) du flotteur, de la douille intérieure (13) possède un élément d'encliquetage (36) qui est tourillonné sur la douille intérieure (13) et qui, lorsque la douille intérieure (13) et le boîtier (11) du flotteur sont dégagés l'un de l'autre, s'engage derrière un bord d'un évidement du boîtier (11) du flotteur.

9. Flotteur selon l'une des revendications précédentes, caractérisé en ce que le flotteur (10) peut être réalisé en matière plastique.
